# FASCICULE DE BREVET EUROPEEN

(11) **EP 1 496 607 B1**
(45) Date de publication et mention de la délivrance du brevet: **06.12.2006**
(21) Numéro de dépôt: 04300382.1
(22) Date de dépôt: 16.06.2004
(51) Int. Cl.: H02P 25/18

(54) **Dispositif comportant un moteur électrique et un variateur de vitesse.**
Vorrichtung bestehend aus einem elektrischen Motor und einem Drehzahlsteller
Device comprising an electric motor and a speed controller

(30) Priorité: 10.07.2003 FR 0308500
(43) Date de publication de la demande: 12.01.2005
(73) Titulaire: MOTEURS LEROY-SOMER, 16000 Angouleme (FR)
(72) Inventeur: ROZIER, Jean-Yves, 38200, VILLETTE DE VIENNE (FR); JOURDAN, Dominique, 69230, SAINT GENIS LAVAL (FR)
(74) Mandataire: Tanty, François

(56) Documents cités:
- EP-A- 0 099 803
- EP-A- 0 841 745
- DE-C- 19 635 597
- US-A- 4 659 975

## Description

La présente invention concerne les dispositifs destinés à être reliés à une alimentation électrique triphasée, comportant un moteur électrique et un variateur de vitesse permettant d'agir sur la vitesse de rotation du moteur.

L'invention concerne plus particulièrement les dispositifs dans lesquels le moteur électrique est un moteur asynchrone, à couple quadratique, notamment destiné à la réfrigération et au traitement de l'air ou au pompage.

Pour faire varier la vitesse de rotation d'un moteur asynchrone, les solutions proposées consistent à faire varier la polarité du moteur en utilisant par exemple plusieurs bobinages ou des bobinages ayant plusieurs polarités, à faire varier la tension d'alimentation en utilisant un transformateur, un auto-transformateur ou un gradateur de tension ou encore à agir sur la fréquence d'alimentation en utilisant un variateur de fréquence.

La solution consistant à faire varier la polarité du moteur a pour inconvénient notamment de diminuer la puissance massique du moteur et d'entraîner un coût de fabrication du moteur plus élevé.

Les autres solutions présentent l'inconvénient de mettre en oeuvre des systèmes onéreux.

Les documents DE 19635597, EP0099803 et EP0841745 divulguent des dispositifs à relier à des moteurs triphasés.

L'invention vise à agir sur la vitesse de rotation d'un moteur asynchrone d'une manière fiable et relativement peu coûteuse.

L'invention répond à cet objectif grâce à un dispositif destiné à être relié à une alimentation électrique comportant trois phases, ce dispositif comportant :
- un moteur électrique asynchrone triphasé, ayant des enroulements connectés en triangle, ces enroulements étant reliés à des bornes de connexion,
- un variateur de vitesse comportant :
   - au moins un commutateur permettant de connecter sélectivement le moteur à l'alimentation électrique selon l'une de deux configurations électriques au moins, ces configurations correspondant respectivement à des vitesses de rotation différentes du moteur,
   dans une première desdites configurations, l'une des bornes du moteur est reliée à une première phase de l'alimentation par l'intermédiaire d'au moins un condensateur de ligne, tandis que les deux autres bornes sont reliées entre elles par l'intermédiaire d'au moins un condensateur de moteur, l'une de ces autres bornes étant en outre reliée à une deuxième phase de l'alimentation.

L'invention présente de nombreux avantages.

Tout d'abord, les condensateurs utilisés ne dissipent pas une puissance thermique importante et la puissance absorbée par le dispositif est sensiblement égale à celle absorbée par le moteur asynchrone.

En outre, la réalisation du moteur n'est pas rendue plus complexe puisqu'un moteur asynchrone conventionnel couplé en triangle peut être utilisé. La possibilité de faire tourner le moteur à une vitesse réduite ne se fait donc pas au détriment de la puissance massique du moteur.

Enfin, la fabrication du variateur de vitesse peut se faire à un coût relativement faible compte tenu de l'absence de composants électroniques de puissance coûteux et de circuit électronique complexe.

Dans une mise en oeuvre particulière de l'invention, dans une deuxième desdites configurations d'alimentation électrique du moteur, les trois bornes du moteur sont reliées directement aux phases respectives de l'alimentation, ce qui permet de faire tourner le moteur asynchrone à sa vitesse maximale.

Le cas échéant, le dispositif peut être réalisé de manière à permettre le choix entre plus de deux vitesses de rotation du moteur.

Le dispositif peut ainsi comporter au moins un deuxième condensateur de ligne et un commutateur permettant de sélectionner parmi au moins deux condensateurs de ligne celui qui est mis en service. Les valeurs de capacité, différentes, de ces condensateurs de ligne sont choisies en fonction des vitesses de rotation souhaitées.

De préférence, la valeur de capacité du condensateur de ligne est inférieure à celle du condensateur de moteur, ce qui permet d'obtenir plus facilement une vitesse de rotation stable.

La capacité du condensateur de ligne peut être comprise par exemple entre 10 et 100 µF et celle du condensateur de moteur comprise également entre 10 et 100 µF, par exemple.

La puissance utile du moteur peut être par exemple supérieure ou égale à 500 W, notamment supérieure ou égale à 60 W, notamment supérieure ou égale à 750 W, voire supérieure ou égale à 1,5 kW, ou autre encore.

Le moteur peut comporter, par exemple quatre, six, huit, dix, douze ou seize pôles au stator.

Dans le cas d'un moteur à six pôles, la valeur de la capacité du condensateur de ligne peut être par exemple comprise entre 30 et 50 µF, étant par exemple de 40 µF, et celle du condensateur de moteur, supérieure, peut être comprise entre 40 et 80 µF, étant par exemple de 60 µF.

Dans le cas d'un moteur à huit pôles, la capacitance du condensateur de ligne peut être par exemple comprise entre 10 et 40 µF, étant par exemple de 20 ou 25 µF, et celle du condensateur de moteur, supérieure, peut être comprise entre 20 et 50 µF, étant par exemple de 30 µF.

La tension d'isolation des condensateurs utilisés est de préférence supérieure ou égale à la tension maximale entre phases de l'alimentation, étant par exemple de 400 V dans le cas d'une alimentation triphasée 380 V.

L'invention a encore pour objet un variateur pour un dispositif tel que défini plus haut.

Ce variateur peut comporter, par exemple :
- trois bornes de sortie à connecter à un moteur asynchrone triphasé,
- trois bornes d'entrée à relier à une alimentation triphasée,
- un commutateur permettant de connecter sélectivement les trois bornes de sortie selon l'une de deux configurations électriques au moins, ces configurations correspondant respectivement à des vitesses de rotation différentes du moteur,
dans une première desdites configurations, l'une des bornes de sortie est reliée à une première borne d'entrée par l'intermédiaire d'au moins un condensateur de ligne, tandis que les autres bornes de sortie sont reliées entre elles par l'intermédiaire d'au moins un condensateur de moteur, l'une de ces autres bornes de sortie étant en outre reliée à une deuxième borne d'entrée. Dans une deuxième configuration, les trois bornes de sortie sont respectivement reliées aux bornes d'entrée.

Le commutateur peut comporter un bouton de commande manuelle et/ou un relais électromécanique ou électronique.

Le commutateur peut encore comporter, lorsqu'il comporte un relais, des bornes de contrôle permettant de connecter un câble de commande à distance du variateur.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de manière schématique un premier exemple de dispositif selon l'invention, le variateur de vitesse étant dans une configuration correspondant à une vitesse maximale de rotation du moteur,
- la figure 2 représente le dispositif de la figure 1, après actionnement du commutateur pour placer le variateur dans une configuration d'alimentation du moteur correspondant à une vitesse de rotation plus faible de celui-ci,
- la figure 3 représente une variante de réalisation permettant de sélectionner une vitesse de rotation du moteur parmi une petite vitesse, une vitesse moyenne et une grande vitesse de rotation, et
- la figure 4 représente de manière schématique un exemple parmi d'autres de boîtier de variateur.

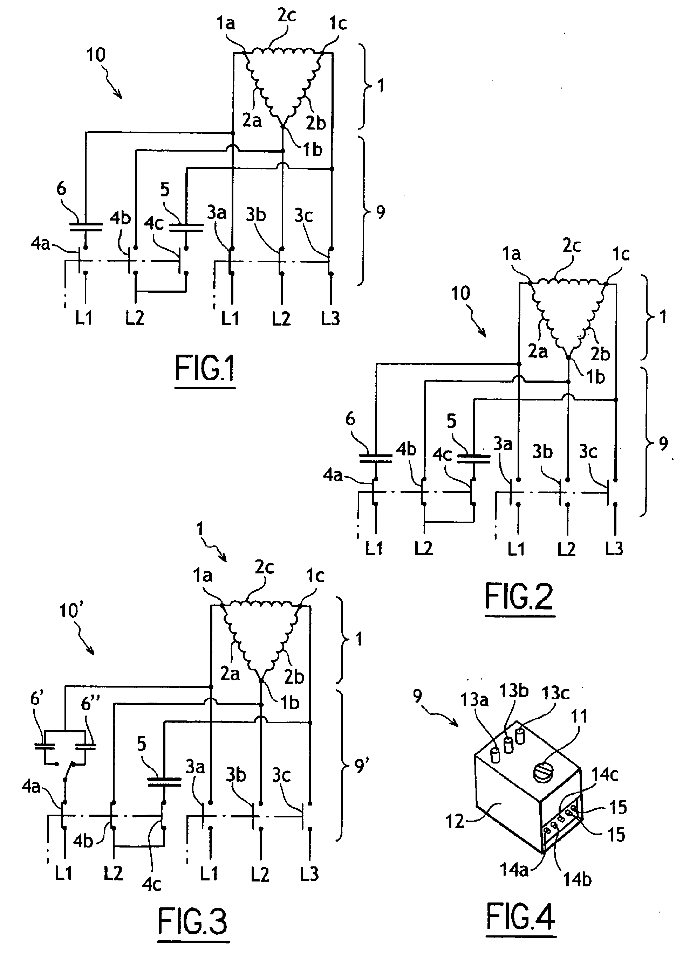

Le dispositif 10 représenté aux figures 1 et 2 comporte un moteur électrique asynchrone triphasé 1 et un variateur de vitesse 9 permettant de faire tourner le moteur 1 à sa vitesse maximale ou à une vitesse réduite.

Le moteur 1 comporte trois enroulements 2a, 2b et 2c couplés en triangle, l'alimentation du moteur se faisant au travers de bornes de connexion 1a, 1b et 1c du moteur.

Le dispositif 10 est destiné à être raccordé à une alimentation électrique triphasée 2 comportant trois phases L1, L2, L3, cette alimentation provenant par exemple d'un réseau industriel 380 V ou d'un onduleur relié à une source de courant continu.

Le variateur 9 comporte par exemple un boîtier 12, représenté de manière simplifiée à la figure 4.

Ce boîtier 12 peut, le cas échéant, être solidaire du moteur, étant par exemple fixé sur le carter de celui-ci.

Le boîtier 12 peut encore être supprimé, logé dans une armoire ou remplacé par une armoire.

Le variateur 9 peut comporter, comme illustré également sur la figure 4, des bornes d'entrée 14a, 14b et 14c à relier aux phases L1 à L3 respectivement, et des bornes de sortie 13a, 13b et 13c à relier respectivement aux bornes 1a, 1b et 1c du moteur 1.

Le variateur 9 comporte, dans l'exemple illustré, un commutateur comportant un premier ensemble d'interrupteurs 3a, 3b, 3c et un deuxième ensemble d'interrupteurs 4a, 4b, 4c, ces interrupteurs étant représentés de manière schématique sur les figures 1 et 2.

Le terme « commutateur » ne doit pas être compris avec un sens restrictif et peut correspondre à un organe de commutation purement mécanique, comportant par exemple un bouton 11 de commande manuelle entraîné en déplacement par l'utilisateur pour sélectionner une vitesse parmi plusieurs, comme illustré à la figure 4, ou encore correspondre à un relais électromécanique. Le commutateur peut encore être purement électronique. Dans ce dernier cas, les interrupteurs du relais ou de l'organe de commutation mécanique sont remplacés par des interrupteurs électroniques, à semiconducteur.

Lorsque le commutateur comporte un relais électromécanique notamment, celui-ci peut par exemple être contrôlé par un câble de commande à distance relié à des bornes 15 du variateur 9, par exemple au nombre de deux et reliées à la bobine du relais.

Le variateur 9 comporte également, conformément à l'invention, un condensateur de moteur 5 et un condensateur de ligne 6, lesquels peuvent être logés par exemple dans le boîtier 12 du variateur.

Dans une première configuration d'alimentation électrique du moteur 1, représentée à la figure 2, celui-ci est alimenté de manière à tourner à vitesse réduite, avec glissement.

Dans cette configuration, les interrupteurs 3a, 3b et 3c sont ouverts tandis que les interrupteurs 4a, 4b et 4c sont fermés.

La première borne 1a du moteur est alimentée par la première phase L1, par l'intermédiaire du condensateur de ligne 6. Les bornes 1b et 1c sont reliées entre elles par le condensateur 5 et la borne 2b est alimentée par la deuxième phase L2. En variante, si l'on souhaite faire tourner le moteur en sens inverse, c'est la borne 1c qui est alimentée par la phase L2.

Dans la deuxième configuration d'alimentation électrique du moteur, représentée à la figure 1, celui-ci tourne à sa vitesse maximale. Les interrupteurs 4a, 4b et 4c sont ouverts tandis que les interrupteurs 3a, 3b et 3c sont fermés, de telle sorte que les trois phases L1, L2 et L3 alimentent respectivement les bornes 1a, 1b et 1c du moteur 1.

La figure 3 représente un dispositif 10' conforme à une variante de réalisation, qui comporte un moteur 1 identique à celui des figures 1 et 2 et un variateur 9' qui diffère du variateur 9 par le fait qu'il comporte non plus un seul condensateur de ligne 6 mais deux condensateurs de ligne 6' et 6" et un commutateur 7 permettant de sélectionner l'un de ces condensateurs 6' et 6", ces derniers ayant des valeurs de capacité différentes, celle du condensateur 6" étant supérieur à celle du condensateur 6'.

Dans la configuration de vitesse maximale, les interrupteurs 3a, 3b et 3c sont fermés et les interrupteurs 4a, 4b et 4c sont ouverts. Dans la configuration correspondant à la plus petite vitesse de rotation, les interrupteurs 3a, 3b et 3c sont ouverts et les interrupteurs 4a, 4b et 4c fermés. Le condensateur de ligne 6' est en service. Dans la configuration correspondant à la vitesse moyenne, c'est le condensateur 6" qui est en service à la place du condensateur 6'.

Le condensateur de moteur 5 et chaque condensateur de ligne 6, 6' ou 6" peut être un composant unique ou être formé par un assemblage en série ou parallèle de plusieurs composants, de façon à obtenir la valeur de capacité souhaitée.

Dans un exemple, parmi d'autres, de mise en oeuvre de l'invention, notamment pour un moteur à six pôles ayant par exemple une puissance utile de 1,8 kW environ, la valeur du condensateur de ligne 6 peut être choisie par exemple à 40 µF et celle du condensateur de moteur 5 à 60 µF. Le moteur 1 peut tourner, dans la configuration basse vitesse, à une vitesse de rotation de 500 tours par minute environ et dans la configuration de vitesse maximale à 900 tours par minute environ. La tension d'isolation des condensateurs utilisés est par exemple de 400 V, la ligne d'alimentation étant triphasée avec une tension de 380 V entre phases.

Dans un autre exemple de mise en oeuvre de l'invention, pour un moteur à huit pôles et la même alimentation électrique, le condensateur de ligne 6' peut avoir une capacité de 20 µF, le condensateur de ligne 6" une capacité de 25 µF et le condensateur de moteur 5 une capacité de 30 µF. La puissance utile du moteur 1 est par exemple de 750 W.

Dans la configuration de vitesse maximale, c'est-à-dire lorsque le moteur est alimenté directement, les interrupteurs 3a, 3b et 3c étant fermés et les interrupteurs 4a, 4b et 4c ouverts, la vitesse de rotation du moteur est d'environ 700 tours par minute.

Dans la configuration de basse vitesse, les interrupteurs 3a, 3b et 3c étant ouverts, les interrupteurs 4a, 4b et 4c fermés et le commutateur 7 basculé sur le condensateur de ligne 6', la vitesse de rotation du moteur est d'environ 330 tours par minute.

Dans la configuration de moyenne vitesse, le commutateur 7 étant basculé sur le condensateur de ligne 6", la vitesse de rotation est d'environ 560 tours par minute.

Bien entendu, l'invention n'est pas limitée aux exemples qui viennent d'être décrits.

En particulier, le variateur de vitesse peut être réalisé avec plus de deux condensateurs de ligne, de façon à disposer d'un plus grand choix encore de vitesses de rotation.

Le passage d'une configuration d'alimentation du moteur à l'autre peut se faire par exemple en fonction d'un algorithme de régulation, afin de réguler une température ou une pression, par exemple.

Le moteur peut entraîner par exemple un ventilateur, hélicoïde ou centrifuge, ou une pompe, notamment centrifuge. Dans ces applications, le couple est quadratique.

Dans toute la description, y compris les revendications, l'expression « comportant un » doit être comprise comme étant synonyme de « comportant au moins un », sauf si le contraire est spécifié.

## Revendications

1. Dispositif (10; 10') destiné à être relié à une alimentation électrique comportant trois phases (L1, L2, L3), ce dispositif comportant :
- un moteur électrique asynchrone triphasé (1), ayant des enroulements (2a, 2b, 2c) connectés en triangle, ces enroulements étant reliés à des bornes de connexion (1a, 1b, 1c),
- un variateur de vitesse (9, 9') comportant :
- au moins un commutateur permettant de connecter sélectivement le moteur à l'alimentation électrique selon l'une de deux configurations électriques au moins, ces configurations correspondant respectivement à des vitesses de rotation différentes du moteur,
dans une première desdites configurations, l'une (1a) des bornes du moteur est reliée à une première phase (L1) de l'alimentation par l'intermédiaire d'au moins un condensateur de ligne (6 ; 6'; 6"), tandis que les deux autres bornes (1b, 1c) sont reliées entre elles par l'intermédiaire d'au moins un condensateur de moteur (5), l'une (1b) de ces autres bornes (1b, 1c) étant en outre reliée à une deuxième phase (L2) de l'alimentation.

2. Dispositif selon la revendication 1, **caractérisé par le fait que** la valeur de capacité du condensateur de ligne (6 ; 6'; 6") est inférieure à celle du condensateur de moteur (5).

3. Dispositif selon la revendication 1 ou 2, **caractérisé par le fait que** dans une deuxième desdites configurations d'alimentation électrique du moteur, les trois bornes (1a, 1b, 1c) du moteur sont reliées directement aux phases respectives (L1, L2, L3) de l'alimentation.

4. Dispositif selon l'une quelconque des revendications 1 à 3, **caractérisé par le fait qu'**il comporte des moyens permettant le choix entre plus de deux vitesses de rotation du moteur.

5. Dispositif selon la revendication 4, **caractérisé par le fait qu**'il comporte au moins un deuxième condensateur de ligne et un commutateur (7) permettant de sélectionner parmi au moins deux condensateurs de ligne (6' ; 6") celui qui est mis en service, les valeurs de capacité, différentes, de ces condensateurs de ligne étant choisies en fonction des vitesses de rotation souhaitées.

6. Dispositif selon la revendication 1, **caractérisé par le fait que** la capacité du condensateur de ligne est comprise entre 10 et 100 µF.

7. Dispositif selon la revendication 1, **caractérisé par le fait que** la capacité du condensateur de moteur est comprise entre 10 et 100 µF.

8. Dispositif selon l'une quelconque des revendications précédentes, **caractérisé par le fait que** la puissance utile du moteur est supérieure ou égale à 600W.

9. Dispositif selon l'une quelconque des revendications précédentes, **caractérisé par le fait que** le moteur comporte quatre, six, huit, dix, douze ou seize pôles au stator.

10. Dispositif selon la revendication 9, le moteur étant à six pôles, **caractérisé par le fait que** la valeur de la capacité du condensateur de ligne est comprise entre 30 et 50 µF, étant notamment de 40 µF et celle du condensateur de moteur, supérieure, est comprise entre 40 et 80 µF, étant notamment de 60 µF.

11. Dispositif selon la revendication 9, le moteur étant à huit pôles, **caractérisé par le fait que** la capacitance du condensateur de ligne est comprise entre 10 et 40 µF, étant notamment de 20 ou 25 µF, et celle du condensateur de moteur, supérieure, est comprise entre 20 et 50 µF, étant notamment de 30 µF.

12. Dispositif selon l'une quelconque des revendications précédentes, **caractérisé par le fait que** la tension d'isolation des condensateurs utilisés est supérieure ou égale à la tension maximale entre phases de l'alimentation, étant notamment de 400 V.

13. Dispositif selon l'une quelconque des revendications précédentes, **caractérisé par le fait que** le moteur entraîne un ventilateur ou une pompe.

14. Variateur, comportant:
- trois bornes de sortie (13a, 13b, 13c) à connecter à un moteur asynchrone triphasé,
- trois bornes d'entrée (14a, 14b, 14c) à relier à une alimentation triphasée,
- un commutateur permettant de connecter sélectivement les bornes de sortie aux bornes d'entrée selon l'une de deux configurations électriques au moins, ces configurations correspondant respectivement à des vitesses de rotation différentes du moteur,
dans une première desdites configurations, l'une des bornes de sortie est reliée à une première borne d'entrée par l'intermédiaire d'au moins un condensateur de ligne, tandis que les autres bornes de sortie sont reliées entre elles par l'intermédiaire d'au moins un condensateur de moteur, l'une de ces autres bornes de sortie étant en outre reliée à une deuxième borne d'entrée.

15. Variateur selon la revendication 14, **caractérisé par le fait que** le commutateur comporte un bouton (11) de commande manuelle.

16. Variateur selon la revendication 14, **caractérisé par le fait que** le commutateur comporte un relais électromécanique ou électronique.

17. Variateur selon la revendication 16, **caractérisé par le fait que** le commutateur comporte des bornes (15) permettant de connecter un câble de commande à distance du variateur.

## Claims

1. A device (10; 10') adapted to be connected to an electrical power supply having three phases (L1, L2, L3), the device including:
- an asynchronous three-phase electric motor (1) having delta-connected windings (2a, 2b, 2c) connected to connecting terminals (1a, 1b, 1c),
- a variable speed drive (9, 9') including:
- at least one switch for selectively connecting the motor to the electrical power supply in one of at least two electrical configurations respectively corresponding to different rotation speeds of the motor,
in a first of said configurations, one terminal (1a) of the motor is connected to a first phase (L1) of the power supply via at least one line capacitor (6; 6'; 6") whereas the other two terminals (1b, 1c) are connected to each other via at least one motor capacitor (5), one other terminal (1b) being also connected to the second phase (L2) of the power supply.

2. A device according to claim 1, **characterised in that** the capacitance of the line capacitor (6; 6'; 6") is lower than that of the motor capacitor (5).

3. A device according to claim 1 or claim 2, **characterised in that**, in a second of said electrical power supply configurations of the motor, the three terminals (1a, 1b, 1c) of the motor are connected directly to the respective phases (L1, L2, L3) of the power supply.

4. A device according to any one of claims 1 to 3, **characterised in that** it includes means for making a selection between more than two rotation speeds of the motor.

5. A device according to claim 4, **characterised in that** it includes at least one second line capacitor and a switch (7) for selecting which of at least two line capacitors (6'; 6") is put into service, the different capacitances of the line capacitors being selected as a function of the required rotation speeds.

6. A device according to claim 1, **characterised in that** the capacitance of the line capacitor is from 10 to 100 µF.

7. A device according to claim 1, **characterised in that** the capacitance of the motor capacitor is from 10 to 100 µF.

8. A device according to any one of the preceding claims, **characterised in that** the usable power of the motor is greater than or equal to 600 W.

9. A device according to any one of the preceding claims, **characterised in that** the motor stator includes four, six, eight, ten, twelve or sixteen poles.

10. A device according to claim 9, the motor being a six-pole motor, **characterised in that** the capacitance of the line capacitor is from 30 to 50 µF, and in particular 40 µF, and that of the motor capacitor, higher, is from 40 to 80 µF, and in particular 60 µF.

11. A device according to claim 9, the motor being an eight-pole motor, **characterised in that** the capacitance of the line capacitor is from 10 to 40 µF, and in particular 20 or 25 µF, and that of the motor capacitor, higher, is from 20 to 50 µF, and in particular 30 µF.

12. A device according to any one of the preceding claims, **characterised in that** the insulation voltage of the capacitors used is higher than or equal to the maximum voltage between phases of the power supply, and in particular 400 V.

13. A device according to any one of the preceding claims, **characterised in that** the motor drives a fan or a pump.

14. A variable speed drive including:
- three output terminals (13a, 13b, 13c) to be connected to an asynchronous three-phase motor,
- three input terminals (14a, 14b, 14c) to be connected to a three-phase power supply,
- a switch for selectively connecting the output terminals to the input terminals in accordance with one of at least two electrical configurations respectively corresponding to different rotation speeds of the motor, in a first of said configurations, one of said output terminals is connected to a first input terminal via at least one line capacitor whereas the other output terminals are connected together via at least one motor capacitor, one of those other output terminals being also connected to a second input terminal.

15. A variable speed drive according to claim 14, **characterised in that** the switch includes a manual control knob or button (11).

16. A variable speed drive according to claim 14, **characterised in that** the switch includes an electromechanical or electronic relay.

17. A variable speed drive according to claim 16, **characterised in that** the switch includes terminals (15) for connecting a remote control cable of the variable speed drive.

## Patentansprüche

1. Vorrichtung (10; 10') zur Verbindung einer Stromversorgung mit drei Phasen (L1, L2, L3), die Vorrichtung umfassend:
einen asynchronen dreiphasigen Elektromotor (1) mit in einem Dreieck geschalteten Wicklungen (2a, 2b, 2c), die mit Verbindungsanschlüssen (1a, 1b, 1c) verbunden sind,
einen Regelantrieb (9, 9'), umfassend:
mindestens einen Schalter, der das wahlweise Anschließen des Motors an die Stromversorgung gemäß einer von mindestens zwei elektrischen Konfigurationen erlaubt, wobei die Konfigurationen jeweils verschiedenen Drehzahlen des Motors entsprechen,
wobei in einer ersten dieser Konfigurationen einer (1a) der Anschlüsse des Motors mit einer ersten Phase (L1) der Versorgung mittels mindestens eines Leitungskondensators (6; 6'; 6'') verbunden ist, während die anderen zwei Anschlüsse (1b, 1c) miteinander mittels mindestens eines Motorenkondensators (5) verbunden sind, wobei einer (1b) dieser anderen Anschlüsse (1b; 1c) darüber hinaus mit einer zweiten Phase (L2) der Versorgung verbunden ist.

2. Vorrichtung nach Anspruch 1, **dadurch gekennzeichnet, dass** der Kapazitätswert des Leitungskondensators (6; 6'; 6'') kleiner als der des Motorenkondensators (5) ist.

3. Vorrichtung nach Anspruch 1 oder 2, **dadurch gekennzeichnet, dass** die drei Anschlüsse (1a, 1b, 1c) des Motors in einer zweiten der Konfigurationen der Stromversorgung des Motors unmittelbar mit den jeweiligen Phasen (L1, L2, L3) der Versorgung verbunden sind.

4. Vorrichtung nach einem der Ansprüche 1 bis 3, **dadurch gekennzeichnet, dass** sie Mittel umfasst, die die Auswahl unter mehr als zwei Drehzahlen des Motors erlauben.

5. Vorrichtung nach Anspruch 4, **dadurch gekennzeichnet, dass** sie mindestens einen zweiten Leitungskondensator sowie einen Schalter (7) umfasst, der unter mindestens zwei Leitungskondensatoren (6'; 6") die Auswahl desjenigen erlaubt, der in Betrieb gesetzt wird, wobei die verschiedenen Kapazitätswerte dieser Leitungskondensatoren in Abhängigkeit von den gewünschten Drehzahlen gewählt werden.

6. Vorrichtung nach Anspruch 1, **dadurch gekennzeichnet, dass** die Kapazität des Leitungskondensators zwischen 10 und 100 µF liegt.

7. Vorrichtung nach Anspruch 1, **dadurch gekennzeichnet, dass** die Kapazität des Motorenkondensators zwischen 10 und 100 µF liegt.

8. Vorrichtung nach irgendeinem der vorhergehenden Ansprüche, **dadurch gekennzeichnet, dass** die Nutzleistung des Motors größer oder gleich 600 W ist.

9. Vorrichtung nach irgendeinem der vorhergehenden Ansprüche, **dadurch gekennzeichnet, dass** der Motor vier, sechs, acht, zehn, zwölf oder sechzehn Pole am Stator aufweist.

10. Vorrichtung nach Anspruch 9, wobei der Motor einer mit sechs Polen ist, **dadurch gekennzeichnet, dass** der Kapazitätswert des Leitungskondensators zwischen 30 und 50 µF liegt, insbesondere 40 µF beträgt, und der größere des Motorenkondensators zwischen 40 und 80 µF liegt, insbesondere 60 µF beträgt.

11. Vorrichtung nach Anspruch 9, wobei der Motor einer mit acht Polen ist, **dadurch gekennzeichnet, dass** die Kapazität des Leistungskondensators zwischen 10 und 40 µF liegt, insbesondere 20 oder 25 µF beträgt, und die größere des Motorenkondensators zwischen 20 und 50 µF liegt, insbesondere 30 µF beträgt.

12. Vorrichtung nach irgendeinem der vorhergehenden Ansprüche, **dadurch gekennzeichnet, dass** die Isolationsspannung der verwendeten Kondensatoren größer oder gleich der maximalen Spannung zwischen Phasen der Versorgung ist, insbesondere 400 V beträgt.

13. Vorrichtung nach irgendeinem der vorhergehenden Ansprüche, **dadurch gekennzeichnet, dass** der Motor einen Ventilator oder eine Pumpe antreibt.

14. Regler, umfassend:
drei Ausgangsanschlüsse (13a, 13b, 13c) zum Anschließen an einen asynchronen dreiphasigen Motor,
drei Eingangsanschlüsse (14a, 14b, 14c) zum Verbinden mit einer dreiphasige Stromversorgung,
einen Schalter, der das wahlweise Anschließen der Ausgangsanschlüsse mit Eingangsanschlüssen gemäß einer von mindestens zwei elektrischen Konfigurationen erlaubt, wobei diese Konfigurationen jeweils verschiedenen Drehzahlen des Motors entsprechen,
wobei eine der Ausgangsanschlüsse in einer ersten dieser Konfigurationen mit einem ersten Eingangsanschluss mittels mindestens eines Leitungskondensators verbunden ist, während die anderen Ausgangsanschlüsse miteinander mittels mindestens eines Motorenkondensators verbunden sind, wobei einer dieser anderen Ausgangsanschlüsse darüber hinaus mit einem zweiten Eingangsanschluss verbunden ist.

15. Regler nach Anspruch 14, **dadurch gekennzeichnet, dass** der Schalter eine Taste (11) zur manuellen Betätigung umfasst.

16. Regler nach Anspruch 14, **dadurch gekennzeichnet, dass** der Schalter ein elektromechanisches oder elektronisches Relais umfasst.

17. Regler nach Anspruch 16, **dadurch gekennzeichnet, dass** der Schalter Anschlüsse (15) umfasst, die das Anschließen eines vom Regler entfernten Bedienungskabels ermöglichen.
